(19) Europäisches Patentamt / European Patent Office / Office européen des brevets

(11) **EP 3 276 585 B1**

(12) **FASCICULE DE BREVET EUROPEEN**

(45) Date de publication et mention
de la délivrance du brevet:
**03.07.2019 Bulletin 2019/27**

(51) Int Cl.:
**G08B 21/04** *(2006.01)* **G01J 5/34** *(2006.01)*
**G01K 7/00** *(2006.01)* **G06K 9/00** *(2006.01)*

(21) Numéro de dépôt: **17183887.3**

(22) Date de dépôt: **28.07.2017**

(54) **CAPTEUR THERMIQUE ACTIF ADAPTE POUR DE GRANDS PIXELS**

AKTIVER TEMPERATURSENSOR, DER FÜR GROSSE PIXEL GEEIGNET IST

ACTIVE THERMAL SENSOR ADAPTED TO LARGE PIXELS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.07.2016 FR 1657392**

(43) Date de publication de la demande:
**31.01.2018 Bulletin 2018/05**

(73) Titulaire: **Commissariat à l'énergie atomique
et aux énergies alternatives
75015 Paris (FR)**

(72) Inventeur: **MAINGUET, Jean-François
38100 GRENOBLE (FR)**

(74) Mandataire: **Brevalex
95, rue d'Amsterdam
75378 Paris Cedex 8 (FR)**

(56) Documents cités:
**EP-A1- 0 840 250       EP-A1- 2 385 486
WO-A1-2016/097611   WO-A1-2016/174354**

## Description

### DOMAINE TECHNIQUE ET ART ANTÉRIEUR

L'invention porte sur un dispositif de détection thermique actif à capacités pyroélectriques dont la structure est adaptée pour des pixels de grande taille. L'invention s'applique notamment à la réalisation d'un dispositif de détection d'une masse thermique importante, par exemple d'un être humain ou d'un animal, et utilisé par exemple pour détecter la présence et/ou les mouvements et/ou la position d'une personne dans un lit, ou bien disposé sur ou dans le sol afin de détecter la présence et/ou les mouvements et/ou la position d'une personne sur ce sol, par exemple pour détecter une chute de cette personne.

Plusieurs technologies existent pour détecter la présence d'une personne dans un lit. Il est par exemple possible de réaliser une telle détection par un dispositif de détection piézorésistif disposé sous un matelas et comportant des moyens de détection piézorésistifs détectant la présence d'une personne grâce à la pression appliquée par cette personne sur le dispositif.

Des technologies similaires peuvent être utilisées pour réaliser un dispositif de détection au sol, comme cela par exemple décrit dans le document US 4 888 581.

Le document WO 2014/037016 A1 décrit un dispositif de détection utilisant l'effet piézoélectrique et pyroélectrique pour réaliser une détection sur une surface sur laquelle se trouve ce dispositif.

Les inconvénients de ces technologies sont notamment :

- la perte de signal lorsque la pression ne varie plus ou que l'équilibre thermique est atteint dans le cas de l'effet piézoélectrique/pyroélectrique, ce qui arrive lorsque la personne ne bouge plus ou que la température de l'objet en contact avec le dispositif de détection est la même que la température du dispositif;
- que les échanges de chaleur ne dépendent pas de la pression appliquée au premier ordre, ce qui rend le dispositif plus sensible qu'une détection piézorésistive pure.

Dans un autre domaine technique qui correspond à celui des capteurs d'empreintes digitales, d'autres technologies de détection sont mises en oeuvre, dont la détection thermique active. Dans de tels capteurs, par exemple ceux décrits dans les documents US 6 091837 et EP 2 385 486 A1, chaque pixel comporte une capacité pyroélectrique formée de deux électrodes conductrices entre lesquelles une portion de matériau pyroélectrique est disposée, et un élément chauffant. Cet élément chauffant dissipe une certaine quantité de chaleur dans le pixel, et l'échauffement du pixel est mesuré au bout d'un certain temps d'acquisition, appelé temps d'intégration, en présence du doigt sur le capteur. Cela permet de distinguer, au niveau de chaque pixel, la présence d'une crête ou d'une vallée de l'empreinte digitale détectée suivant que la chaleur est absorbée par la peau (pixel en présence d'une crête de l'empreinte digitale) ou conservée dans le pixel (pixel en présence d'une vallée de l'empreinte digitale). Cela conduit à une température finale plus faible dans le cas d'un pixel en présence d'une crête, où la chaleur est absorbée par la peau, par rapport à un pixel en présence d'une vallée.

Au premier ordre, un tel capteur permet de mesurer la capacité calorifique, également appelée chaleur massique ou capacité thermique massique, d'un élément en contact avec le capteur. Les mesures obtenues dépendent également de la conductivité thermique entre le capteur et la partie de l'élément (crête ou vallée dans le cas d'une empreinte digitale) en présence.

Pour former un capteur thermique actif, les pixels de ce capteur sont couplés à des éléments chauffants utilisant généralement l'effet Joule qui dissipe de la chaleur depuis un élément résistif qui est parcouru par un courant. Un des niveaux de l'empilement technologique formant les pixels est avantageusement utilisé pour former ces éléments chauffants. Par exemple, il possible d'utiliser un des niveaux électriquement conducteurs servant à réaliser les transistors et les interconnexions du capteur si l'un de ces niveaux comporte un matériau conducteur présentant une résistivité adéquate et sur lequel il suffit d'appliquer une des tensions déjà disponibles, par exemple la tension d'alimentation du capteur, pour générer un chauffage par effet Joule. Cela est notamment utilisé lorsque le capteur comporte des transistors de type TFT (« Thin-Film Transistor », ou transistor en couches minces) réalisés sur un substrat de verre ou de plastique.

Les pixels d'un tel capteur sont disposés en formant une matrice de plusieurs lignes et de plusieurs colonnes de pixels. La lecture des pixels est généralement réalisée ligne par ligne. Les éléments chauffants peuvent alors être également commandés ligne par ligne à l'aide d'un transistor se trouvant en tête de chaque ligne, évitant ainsi l'ajout de transistors de commande dans chacun des pixels. Chaque ligne d'éléments chauffants est par exemple connectée, d'un côté de la matrice de pixels, à la masse, et de l'autre coté au transistor de commande associé à la ligne de pixels et relié à une alimentation adaptée de manière à maîtriser le courant parcourant les éléments chauffants, et donc la puissance thermique injectée par effet Joule dans les pixels par ces éléments chauffants.

Pour réaliser une lecture de la variation de charges électriques apparaissant dans la capacité pyroélectrique de chaque pixel d'un capteur thermique actif, chacun des pixels comporte au moins un transistor de sélection, et les transistors de sélection des pixels de chaque colonne de pixels sont reliés à une ligne conductrice elle-même reliée à un circuit de lecture. Lors de la lecture d'une ligne de pixels, les transistors de sélection des pixels de cette ligne sont mis à l'état passant, ce qui permet de relier les noeuds actifs des pixels de cette ligne aux circuits de lecture se trouvant en pied de chacune des colonnes de pixels. Les transistors de sélection bloqués des pixels appartenant aux autres lignes de pixels empêchent le déplacement de charges depuis ces autres pixels vers les circuits de lecture. D'autres transistors peuvent également être présents dans chaque pixel, notamment lorsque les pixels sont lus en tension et qu'ils nécessitent la présence d'un transistor de réinitialisation et d'un transistor suiveur de tension, ou que le capteur forme également un capteur optique dans lequel un transistor est présent dans chaque pixel pour relier une photodiode de chaque pixel à un circuit de lecture dédié.

Bien que la détection thermique active présente de nombreux avantages par rapport aux autres techniques utilisées pour réaliser par exemple une détection de personne dans un lit ou sur un sol (comme par exemple l'obtention d'un niveau de signal stable indépendant de la température de la personne car c'est principalement sa masse thermique, associée à sa conductivité thermique, qui est impliquée dans un détection thermique active), la structure de ces capteurs d'empreintes digitales n'est pas adaptée pour réaliser une détection de personne en raison des dimensions du dispositif nécessaires à sa réalisation. En effet, un capteur d'empreinte digitale utilise usuellement des pixels ayant un pas égal à environ 50 µm, ce qui n'est pas compatible, et inutile, avec un dispositif de détection ayant des dimensions de l'ordre du mètre. De plus, les épaisseurs des protections de surface d'un dispositif de détection de personne sont de l'ordre d'un ou plusieurs millimètres, ce qui est bien trop important pour un dispositif ayant des pixels réalisés avec un pas égal à environ 50 µm. La présence des transistors au sein des pixels est également contraignante pour réalisation d'un dispositif de détection de personne car la réalisation de ces transistors requière la mise en oeuvre de dépôts supplémentaires de matériaux, ces dépôts étant coûteux.

## EXPOSÉ DE L'INVENTION

Un but de la présente invention est de proposer un dispositif de détection thermique actif, c'est-à-dire comportant des éléments chauffant les pixels, à capacités pyroélectriques, qui est adapté pour être réalisé avec des pixels de grande taille, apportant ainsi les avantages de la détection thermique active à un dispositif par exemple adapté à la détection d'une personne ou d'un animal lorsque celle-ci ou celui-ci se trouve sur ce dispositif, et qui ne nécessite pas la présence de transistors au sein des pixels.

Pour cela, l'invention propose un dispositif de détection thermique actif comportant plusieurs pixels, chaque pixel comprenant au moins :

- une capacité pyroélectrique formée par au moins une portion de matériau pyroélectrique disposée entre une électrode inférieure et une électrode supérieure, dans laquelle une première des électrodes inférieure et supérieure correspond à une électrode de lecture du pixel, et

- un élément chauffant associé uniquement à ce pixel et apte à chauffer la portion de matériau pyroélectrique de la capacité pyroélectrique dudit pixel indépendamment des autres éléments chauffants associés aux autres pixels lors d'une mesure thermique par la capacité pyroélectrique dudit pixel,

et dans lequel les électrodes de lecture sont formées par une première couche électriquement conductrice commune à tous les pixels et en contact avec les portions de matériau pyroélectrique des pixels.

Dans ce dispositif, chaque élément chauffant est apte à être commandé individuellement, c'est-à-dire indépendamment des éléments chauffants associés aux autres pixels.

La mise en oeuvre d'une détection thermique active a pour avantage, par rapport à une détection thermique passive, de détecter la présence d'une masse thermique et non uniquement un changement thermique comme c'est le cas pour une détection thermique passive, c'est-à-dire sans moyen de chauffage.

Des pixels de grande taille correspondent par exemple à des pixels de dimensions comprises entre environ 1 cm et 10 cm de côté, et/ou réalisés avec un pas par exemple de l'ordre de 10 cm ou compris entre environ 5 cm et 50 cm.

Dans ce dispositif, les électrodes de lecture sont formées par une première couche électriquement conductrice commune à tous les pixels de la matrice et en contact avec les portions de matériau pyroélectrique des pixels de la matrice. Cette caractéristique est possible grâce au fait que les éléments chauffants sont adressables individuellement. L'électronique de lecture utilisée avec un tel dispositif peut donc comporter une seule entrée, simplifiant donc grandement sa réalisation et la rendant compatible avec les applications envisagées pour des pixels de grande taille.

La combinaison des différentes caractéristiques de ce dispositif rend possible la réalisation de pixels de grande taille adaptés pour un dispositif servant à la détection d'une masse thermique ayant une surface importante, c'est-à-dire relativement étendue.

Un autre avantage lié au fait que les éléments chauffants sont adressables individuellement est que la résolution du dispositif peut aisément être modifiée en chauffant plusieurs pixels simultanément.

De manière avantageuse, un tel dispositif peut être utilisé en tant que détecteur de présence d'une personne, par exemple dans un lit. Dans ce cas, le dispositif est réalisé sous la forme d'une alèze destinée à être disposée entre le matelas et un drap recouvrant le matelas et permettant de détecter la présence ou non d'une personne, voire sa position dans le lit.

Un tel dispositif peut être également disposé sur ou dans un sol, par exemple sous un parquet, afin de détecter la présence et/ou les mouvements d'une personne sur ce sol, par exemple une chute.

Un tel dispositif peut également être utilisé pour détecter une présence d'une personne sur un siège, le dispositif pouvant dans ce cas être disposé sous le tissu du siège.

Un tel dispositif peut également être disposé sur ou dans un volant (ou plus généralement tout moyen de guidage) d'un véhicule pour détecter qu'une personne tient bien ce volant.

Un tel dispositif peut également être utilisé pour réaliser une détection d'eau, de glace ou de neige sur un sol, un toit, etc.

Un tel dispositif peut également être utilisé pour compter un nombre de personnes présentes sur un sol.

Ce capteur correspond à un capteur actif (car comprenant des pixels chauffés) réalisé avec un ensemble de pixels passifs, c'est-à-dire sans transistors présents au sein des pixels. Ainsi, la réalisation de ce capteur n'est pas limitée par la technologie nécessaire à la réalisation de transistors au sein des pixels, et peut être réalisé en technologie imprimée, par exemple sur un substrat souple.

Sans transistor au sein des pixels, la fabrication des pixels est simplifiée et se résume à la capacité de réaliser les éléments chauffants et les éléments de connexion de ces éléments chauffants à la résolution souhaitée. Ceci devient possible avec des procédés moins onéreux que la lithographie sur semi-conducteur, tels que les dépôts par impression. Les différentes portions conductrices formant les éléments des pixels du capteur peuvent être réalisées avec des encres conductrices suffisamment stables pour ne pas nécessiter d'encapsulation très performante. La réalisation du capteur est envisageable par impression, par exemple sur des substrats plastiques simples (films PET).

Un tel capteur a également pour avantage de réduire le nombre de signaux nécessaires à son pilotage du fait que la sélection du pixel lu est réalisée par l'intermédiaire du chauffage de ce pixel.

Le capteur comporte en outre un circuit de lecture auquel les électrodes de lecture sont reliées.

Les pixels peuvent former ensemble une surface de détection ayant une largeur comprise entre environ 0,5 m et 2 m et une longueur comprise entre environ 1 m et 10 m, ou encore une surface de détection comprise entre environ 0,5 m$^2$ et 10 m$^2$, et/ou chaque pixel peut former une surface de détection ayant des côtés chacun de dimension comprise entre environ 1 cm et 10 cm, ou une surface de détection comprise entre environ 1 cm$^2$ et 100 cm$^2$, et/ou le dispositif peut comporter un nombre de pixels compris entre environ 25 et 250.

Une deuxième des électrodes inférieure et supérieure de chaque pixel peut être formée par une deuxième couche électriquement conductrice commune à tous les pixels et apte à être reliée électriquement à un potentiel électrique de référence. Dans cette configuration, une seule capacité pyroélectrique est commune à tous les pixels de la matrice, simplifiant ainsi la réalisation du dispositif.

Dans ce cas, la deuxième couche électriquement conductrice peut être disposée entre les éléments chauffants et les électrodes de lecture. Dans cette configuration, la deuxième couche électriquement conductrice forme à la fois les électrodes supérieures des pixels et une couche de blindage électromagnétique du dispositif.

Le dispositif peut comporter en outre une couche diélectrique recouvrant les électrodes supérieures des pixels et sur laquelle les éléments chauffants sont disposés.

Chaque élément chauffant peut comporter une ou plusieurs portions de matériau formant un élément résistif disposé à l'aplomb d'une partie de la capacité pyroélectrique du pixel et dont des première et deuxième extrémités sont reliées électriquement, par l'intermédiaire de premières et deuxièmes pistes électriquement conductrices, à un circuit de commande électronique apte à faire circuler un courant électrique de chauffage dans chaque élément résistif individuellement tel qu'il chauffe par effet Joule la capacité pyroélectrique du pixel.

Dans ce cas, chaque élément résistif peut comporter une ou plusieurs portions de matériau résistif de section inférieure à celle des premières et deuxièmes pistes conductrices, et par exemple disposées selon un motif de serpentin, et/ou le matériau de la ou les portions formant chaque élément résistif a une résistivité supérieure à un matériau des premières et deuxièmes pistes électriquement conductrices.

La première extrémité de chaque élément résistif peut être reliée électriquement au circuit de commande électronique par l'intermédiaire d'une des premières pistes électriquement conductrices distincte des autres premières pistes électriquement conductrices reliant électriquement les premières extrémités des autres éléments résistifs au circuit de commande électronique, et/ou les deuxièmes extrémités des éléments résistifs des pixels peuvent être reliées électriquement au circuit de commande électronique par l'intermédiaire des deuxièmes pistes électriquement conductrices qui sont reliées électriquement entre elles. Les deuxièmes pistes électriquement conductrices peuvent être reliées à la masse.

Des parties des couches formant les électrodes inférieures et supérieures des pixels et des parties des premières et deuxièmes pistes électriquement conductrices peuvent ne pas être recouvertes par d'autres matériaux et peuvent former des accès électriques aux électrodes inférieures et supérieures et aux éléments chauffants.

La première couche électriquement conductrice peut être gravée telle qu'elle comporte des premières portions localisées sous les éléments chauffants et formant les électrodes de lecture des pixels, et des deuxièmes portions reliant électriquement entre elles les premières portions. Cette configuration permet de réduire la valeur de la capacité pyroélectrique des pixels.

Le dispositif peut comporter en outre des trous traversant le dispositif. Ces trous confèrent une perméabilité à l'humidité du dispositif et réduit également la valeur de la capacité pyroélectrique des pixels.

Le matériau pyroélectrique peut être du PVDF ou du P(VDF-TrFE), et/ou les pixels peuvent être disposés les uns à côté des autres en formant une matrice de plusieurs lignes et colonnes.

L'invention concerne également un procédé de réalisation d'un dispositif de détection thermique actif comportant plusieurs pixels, le procédé comportant au moins la mise en oeuvre des étapes suivantes :

- réalisation, pour chaque pixel, d'au moins une capacité pyroélectrique formée par au moins une portion de matériau pyroélectrique disposée entre une électrode inférieure et une électrode supérieure, dans laquelle une première des électrodes inférieure et supérieure correspond à une électrode de lecture du pixel ;
- réalisation, pour chaque pixel, d'au moins un élément chauffant associé uniquement à ce pixel et apte à chauffer la portion de matériau pyroélectrique de la capacité pyroélectrique dudit pixel indépendamment des autres éléments chauffants associés aux autres pixels lors d'une mesure thermique par la capacité pyroélectrique dudit pixel,

et dans lequel les électrodes de lecture sont formées par une première couche électriquement conductrice commune à tous les pixels et en contact avec les portions de matériau pyroélectrique des pixels.

La réalisation des électrodes inférieures des pixels et/ou des électrodes supérieures des pixels et/ou des éléments chauffants des pixels peut comporter la mise en oeuvre d'au moins un dépôt par impression d'au moins un matériau électriquement conducteur. Le dépôt par impression a pour avantage de fortement réduire le coût lié à la réalisation du dispositif.

La réalisation de la capacité pyroélectrique de chaque pixel peut comporter la mise en oeuvre d'une gravure de la première couche électriquement conductrice telle que des portions restantes de la première couche électriquement conductrice forment des premières portions localisées sous les éléments chauffants et formant les électrodes de lecture des pixels, et des deuxièmes portions reliant électriquement entre elles les premières portions.

Le procédé comporte également la réalisation d'un circuit de lecture auquel les électrodes de lecture sont reliées.

## BRÈVE DESCRIPTION DES DESSINS

La présente invention sera mieux comprise à la lecture de la description d'exemples de réalisation données à titre purement indicatif et nullement limitatif en faisant référence aux dessins annexés sur lesquels :

- la figure 1 représente une vue en coupe d'un pixel d'un dispositif de détection thermique actif, objet de la présente invention ;
- les figures 2 à 4 représentent des vues de dessus d'une partie d'un dispositif de détection thermique actif, objet de la présente invention, selon un premier mode de réalisation ;
- la figure 5 représente schématiquement le circuit électrique formé par les différents éléments du dispositif de détection thermique actif, objet de la présente invention, selon le premier mode de réalisation ;
- la figure 6 représente schématiquement des éléments chauffants d'un dispositif de détection thermique actif, objet de la présente invention, selon une variante de réalisation ;
- la figure 7 représente une vue de dessus d'une partie d'un dispositif de détection thermique actif, objet de la présente invention, selon un deuxième mode de réalisation ;
- la figure 8 représente une vue de dessus d'une partie d'un dispositif de détection thermique actif, objet de la présente invention, selon une variante du premier mode de réalisation.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

## EXPOSÉ DÉTAILLÉ DE MODES DE RÉALISATION PARTICULIERS

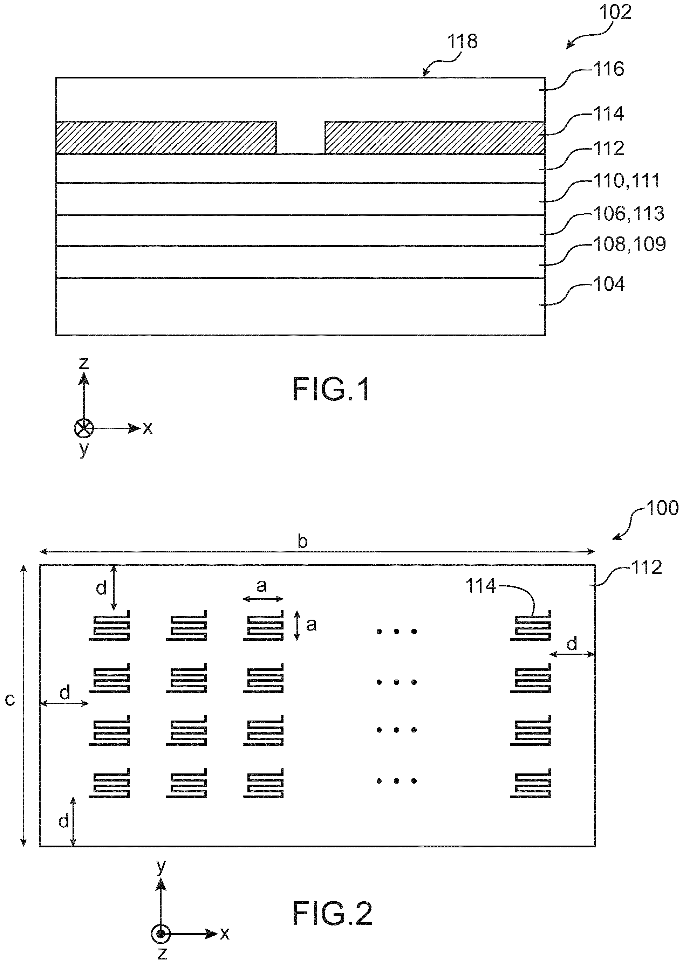

On se réfère tout d'abord à la figure 1 qui représente une vue en coupe d'un pixel 102 d'un dispositif 100 de détection thermique actif.

Le pixel 102 est réalisé sur un substrat 104 correspondant par exemple à un substrat souple, par exemple à base de polyimide ou de PEN (polyéthylène naphtalate) ou de PET (polyéthylène téréphtalate), sur lequel les éléments électriques du capteur 100 sont réalisés par technologie imprimée (par exemples via une réalisation avec des têtes d'écriture de type jet d'encre). L'épaisseur du substrat 104 est par exemple égale à environ 125 $\mu$m ou plus généralement comprise entre environ 50 $\mu$m et 250 $\mu$m.

Les pixels 102 du capteur 100 sont ici disposés en formant une matrice de plusieurs lignes et plusieurs colonnes de pixels 102. Le pas des pixels 102, dans le plan (X,Y) (c'est-à-dire le plan du substrat 104), est par exemple égal à environ 10 cm (pour des pixels de dimension 10 x 10 cm dans le plan (X,Y)), ou compris entre environ 10 cm et 20 cm, ou plus généralement compris entre environ 5 cm et 50 cm.

Les pixels 102 peuvent être régulièrement répartis sur l'ensemble de la surface de détection du dispositif 100. Toutefois, il est possible de ne pas disposer de pixels 102 au niveau des bords du dispositif 100. De manière générale, il est possible que la répartition des pixels 102 sur l'ensemble de la surface de détection du dispositif 100 ne soit pas uniforme, certaines régions du dispositif 100 pouvant être plus ou moins denses que le reste de la surface du dispositif 100.

Pour les applications de détection d'une personne, la surface de détection du dispositif (correspondant à la surface dans le plan (X,Y) des différentes figures) est par exemple comprise entre environ 0,5 m x 1 m et 2 m x 2 m. En outre, chaque pixel peut former une surface de détection ayant des côtés de dimension comprise entre environ 1 cm et 10 cm. Enfin, le dispositif 100 peut comporter un nombre de pixels compris entre environ 25 et 250.

Chacun des pixels 102 du capteur 100 comporte des moyens de mesure, ou de détection, thermique formés par une capacité pyroélectrique. Chaque capacité pyroélectrique comporte une portion 106 de matériau pyroélectrique disposée entre une électrode inférieure 108 et une électrode supérieure 110. Le matériau pyroélectrique de la portion 106 est ici un copolymère, avantageusement du P(VDF-TrFE) ou du PVDF. En variante, le matériau pyroélectrique de la portion 106 peut être de l'AlN ou du PZT, ou tout autre matériau pyroélectrique adapté pour former une capacité pyroélectrique. L'épaisseur de la portion 106 est par exemple égale à environ 3 $\mu$m, et par exemple comprise entre environ 2 et 10 $\mu$m.

Les électrodes 108, 110 comportent chacune au moins un matériau électriquement conducteur, par exemple un matériau métallique tel que de l'argent, du cuivre, du carbone ou encore du PEDOT (poly(3,4-éthylènedioxythiophène) sous la forme d'encre déposée par impression. L'épaisseur de chacune des électrodes 108, 110 est par exemple égale à environ 5 $\mu$m ou comprise entre environ 1 $\mu$m et 10 $\mu$m.

Les électrodes inférieures 108 sont formées par une première couche électriquement conductrice 109, ici métallique, commune à tous les pixels 102 de la matrice 100. De même, les électrodes supérieures 110 sont formées par une deuxième couche électriquement conductrice 111, ici métallique, commune à tous les pixels 102 de la matrice 100. Les portions 106 de matériau pyroélectrique de l'ensemble des pixels de la matrice du capteur 100 sont également réalisées sous la forme d'une seule couche de matériau pyroélectrique 113 recouvrant la première couche 109 qui forme les électrodes inférieures 108. La deuxième couche 111 qui forme les électrodes supérieures 110 recouvre cette couche de matériau pyroélectrique 113.

Dans ce premier mode de réalisation, les première et deuxième couches 109, 111 ainsi que la couche de matériau pyroélectrique 113 sont donc continues, c'est-à-dire ne sont pas interrompues entre les pixels 102.

La deuxième couche 111 forme un blindage électromagnétique au sein de l'empilement de couches du dispositif 100, évitant ainsi la récupération de bruit électromagnétique (par exemple du bruit à 50 Hz provenant du secteur) dans les mesures réalisées. Cette deuxième couche 111 permet également de protéger le dispositif 100 vis-à-vis des décharges électrostatiques (ESD).

La deuxième couche 111 est recouverte par une couche diélectrique 112 d'épaisseur par exemple égale à environ 3 $\mu$m ou comprise entre environ 3 $\mu$m et 5 $\mu$m, et sur laquelle des éléments chauffants 114 des pixels 102 sont réalisés. Chacun des éléments chauffants 114 forme un élément métallique résistif (résistance électrique par exemple comprise entre environ 10 $\Omega$ et 100 $\Omega$) associé à un pixel 102 et qui permet de chauffer ce pixel 102 indépendamment des éléments chauffants 114 associés aux autres pixels 102. Les éléments chauffants 114 permettent, lors d'une détection mise en oeuvre par le dispositif 100, de dissiper une certaine quantité de chaleur dans les pixels 102, et notamment dans le matériau pyroélectrique de la couche 113. Dans chaque pixel 102, le chauffage de la portion 106 de matériau pyroélectrique est obtenu en faisant circuler un courant dans l'élément chauffant 114 formant la résistance de chauffage de chacun des pixels 102. Les éléments chauffants 114 sont par exemple réalisés par un dépôt d'une encre métallique, comprenant par exemple de l'argent, déposée par impression avec une épaisseur égale à environ 5 $\mu$m ou comprise entre environ 1 $\mu$m et 10 $\mu$m.

Les éléments chauffants 114 ainsi que les parties de la couche diélectrique 112 sur lesquelles les éléments chauffants 114 ne sont pas présents sont recouverts par une couche de protection 116, correspondant par exemple à une couche laminée de PET ou de tout autre matériau adapté à la réalisation de cette couche. L'épaisseur de la couche de protection 116 peut être comprise entre quelques microns (par exemple 5 $\mu$m) et environ 100 $\mu$m, par exemple égale à environ 50 $\mu$m, ou bien être plus importante (par exemple de l'ordre de 300 $\mu$m ou plus). Dans l'exemple de réalisation décrit ici, l'épaisseur de la couche de protection 116 est égale à environ 25 $\mu$m. De manière alternative, la couche de protection 116 peut correspondre à une couche de DLC (Diamond Like Carbon) d'épaisseur inférieure à environ 1 $\mu$m.

Une face supérieure 118 de la couche de protection 116 correspond à la surface au-dessus de laquelle la détection thermique est destinée à être réalisée. Par exemple, cette face supérieure 118 forme la surface sur laquelle la présence d'une personne est destinée à être détectée.

Pour que le PVDF de la portion 106 acquière ses propriétés pyroélectriques (et aussi piézoélectriques), ce matériau est soumis, une fois pour toute la durée de vie de la capacité pyroélectrique, à un champ électrique d'environ 100 volts par micron d'épaisseur de PVDF. Les molécules à l'intérieur du PVDF s'orientent, et restent orientées ainsi, même lorsque le PVDF n'est plus soumis à ce champ électrique. Le PVDF peut être ainsi polarisé en appliquant une tension de polarisation initiale aux bornes des électrodes 108, 110.

Après cette polarisation initiale, lorsque la portion 106 est soumise à une variation de température ΔT induite par exemple par la présence d'une personne sur le dispositif 100, cette variation de température ΔT provoque l'apparition d'un champ électrique supplémentaire générant des charges ΔQ entre les électrodes 108, 110 telles que :

$$\Delta Q = S.\gamma.\Delta T \; .$$

Le paramètre S correspond à la surface de la portion 106 en regard avec chacun des éléments chauffants. Le paramètre γ correspond au coefficient pyroélectrique du matériau pyroélectrique de la portion 106. Par exemple, le coefficient pyroélectrique γ du PVFD-TrFE est égal à environ 32 $\mu$C/m$^2$/K.

La portion 106 et les électrodes 108, 110 formant une capacité de valeur C, les charges ΔQ générées induisent une différence de potentiels électriques ΔV entre les électrodes 108, 110 telle que :

$$C.\Delta V = \Delta Q = S.\gamma.\Delta T \; .$$

Dans le dispositif 100 décrit ici, la capacité pyroélectrique est commune à tous les pixels 102 du dispositif. Ainsi, la distinction entre les pixels lus se fait grâce au fait que les éléments chauffants 114 sont adressables individuellement.

Lorsque le potentiel sur l'électrode de lecture (formée par l'une des électrodes 108, 110, et ici de préférence l'électrode inférieure 108, l'autre des électrodes étant reliée à la masse) est fixe (lecture dite « en courant »), les charges générées s'écoulent vers un circuit de lecture en formant un courant intégré en sortie, avec dans ce cas :

$$\frac{\Delta Q}{\zeta} = \frac{S.\gamma.\Delta T}{\zeta} \; .$$

avec ζ correspondant au temps d'intégration pendant lequel la mesure est réalisée par le pixel. Une telle lecture en courant a pour avantage d'être insensible, au premier ordre, à la valeur des capacités, en particulier des capacités parasites.

Le sens du courant obtenu entre les électrodes 108, 110 dépend du sens du champ électrique avec lequel le PVDF de la portion 106 a été initialement polarisé. Dans le cas de certains autres matériaux pyroélectriques tels que le nitrure d'aluminium, ce sens de polarisation initiale dépend de la manière avec laquelle le matériau pyroélectrique a été déposé, de son ordre et de son orientation cristallographique. En outre, le sens du courant obtenu peut varier suivant que la variation de température subie par la capacité pyroélectrique soit positive ou négative.

De manière générale, toutes les couches de matériau du dispositif 100 peuvent être déposées par impression.

La figure 2 représente une vue de dessus d'une partie du dispositif 100 selon un premier mode de réalisation. Sur cette figure, seuls la couche diélectrique 112 et les éléments chauffants 114 disposés sur la couche diélectrique 112 sont représentés.

Le dispositif 100 correspond à un dispositif de détection de personne adapté pour réaliser une détection d'une personne dans un lit. Ainsi, le dispositif 100 est ici destiné à être disposé sur un matelas et sous un drap en matière textile d'une épaisseur par exemple de l'ordre quelques centaines de microns à 1 mm. Le dispositif 100 a ici une longueur « b » égale à environ 190 cm et une largeur « c » égale à environ 90 cm. Ces valeurs peuvent bien entendu différer selon les dimensions souhaitées (plus petites par exemple pour un berceau ou une couveuse).

Dans ce premier mode de réalisation, les éléments chauffants 114 correspondent à des éléments résistifs comportant chacun, pour un pixel 102, une portion de matériau conducteur résistif disposée selon un motif de serpentin, et donc apte à chauffer par effet Joule la portion de matériau pyroélectrique de ce pixel 102. Chacun des éléments chauffants 114 forme une résistance électrique ici égale à environ 100 Ω, destinée à être alimentée via l'application d'une tension électrique aux bornes, ou extrémités, de chaque élément chauffant 114, la valeur de cette tension électrique étant par exemple comprise entre environ 3 V et 10 V. En réalisant les éléments résistifs avec de l'encre à base d'argent, la largeur de la portion formant le serpentin est par exemple comprise entre environ 250 $\mu$m et 500 $\mu$m.

La valeur de la tension de chauffage appliquée aux bornes des éléments chauffants 114 est choisie en fonction de la puissance de chauffage désirée, cette puissance étant fonction notamment de la résistivité du matériau des éléments chauffants 114, de l'épaisseur de la portion de matériau pyroélectrique destinée à être chauffée ainsi que de l'épaisseur des différentes couches du dispositif 100, du coefficient pyroélectrique du matériau pyroélectrique, de la sensibilité du circuit de lecture, du niveau de bruit du circuit de lecture et du temps d'intégration. Dans un pixel 102 du dispositif 100 décrit ici, la puissance de chauffage est par exemple de l'ordre de 1 W ou comprise entre environ 100 mW et 2 W.

En outre, la variation de température du matériau pyroélectrique à obtenir peut être égale à environ 200 mK, avec une différence d'environ 50 mK entre un pixel en contact avec du vide et un pixel en contact avec la personne, après un temps d'intégration d'environ 0,5 s, ou une différence comprise entre environ 5 mK et 100 mK.

Ainsi, lorsque l'une des deux extrémités d'un des éléments chauffants 114 est reliée à la masse et qu'un potentiel de chauffage $V_{chauffe}$ est appliqué sur l'autre extrémité de cet élément chauffant 114, un courant s'écoule alors depuis cette autre extrémité jusqu'à celle reliée à la masse, provoquant un échauffement par effet Joule dans cet élément chauffant 114, et échauffant ainsi le matériau pyroélectrique du pixel 102 dont cet élément chauffant 114 fait partie. Par exemple, l'application d'une tension de 10 V aux bornes d'un élément chauffant 114 formant une résistance de 100 Ω provoque une dissipation d'une puissance de 1 W.

Chaque élément chauffant 114 occupe par exemple une surface de section, dans le plan principal de la couche diélectrique 112 (plan (X,Y)), de forme carré dont le côté a pour dimension une valeur appelée « a » par exemple égale à environ 32 mm, ou comprise entre environ 10 mm et 100 mm.

De plus, chaque élément chauffant 114 est ici disposé au centre de chaque pixel 102 qui correspond à une surface par exemple carrée et de dimensions égales à environ 20 cm x 20 cm, ou comprises entre environ 5 cm x 5 cm et 50 cm x 50 cm. Dans l'exemple décrit ici, deux éléments chauffants 114 voisins sont par exemple espacés l'un de l'autre d'une distance égale à environ 19 cm.

Cette disposition des éléments chauffants 114 aux centres des pixels 102 permet de concentrer le chauffage réalisé dans chaque pixel 102, augmentant ainsi les différences de températures et facilitant ainsi la propagation thermique vers la masse thermique à détecter.

Dans chaque pixel 102 du dispositif 100, une capacité pyroélectrique est formée par les parties des couches 109, 111 qui sont superposées l'une au-dessus de l'autre ainsi que du matériau pyroélectrique se trouvant entre ces parties des couches 109, 111.

En outre, les éléments chauffants 114 se trouvant en périphérie de la matrice d'éléments chauffants 114 formée sur la couche diélectrique 112 sont espacés des bords de la couche diélectrique 112 d'une distance d par exemple égale à environ 15 cm.

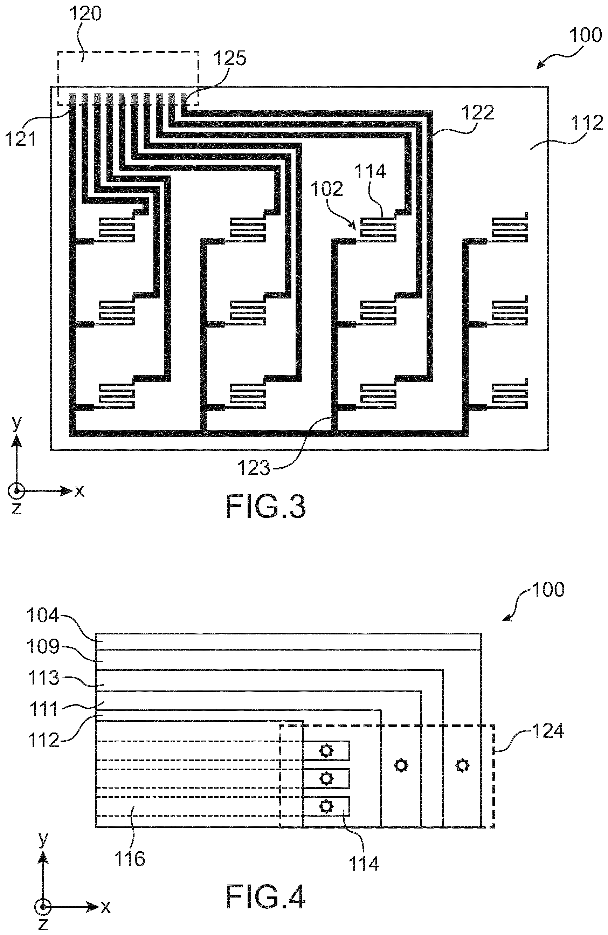

Du fait que chacun des éléments chauffants 114 est destiné à être commandé individuellement, c'est-à-dire indépendamment des autres éléments chauffants 114, chaque élément chauffant 114 comporte ses deux extrémités reliés à un circuit de commande électronique 120 par l'intermédiaire d'une première et d'une deuxième pistes électriquement conductrices 122, 123. La figure 3 représente un exemple de réalisation de telles pistes 122, 123 reliées à une partie des éléments chauffants 114 du dispositif 100. Sur cette figure 3, le circuit 120 comporte une entrée 121 reliée à la masse à laquelle une deuxième extrémité de chacune des éléments chauffants 114 est reliée par l'intermédiaire d'une deuxième piste 123. La première extrémité de chacun des éléments chauffants 114 est reliée à une autre entrée 125 du circuit 120, qui est distincte pour chacune de ces premières extrémités des éléments chauffants 114, par l'intermédiaire d'une première piste 122.

La largeur des pistes 122, 123 est ici supérieure à la largeur des portions conductrices formant les serpentins des éléments chauffants 114, afin de limiter les résistances d'accès par rapport aux éléments chauffants 114. Cette largeur des pistes 122, 123 est par exemple égale à environ 2 cm ou comprise entre environ 1 cm et 5 cm, tandis que celle des portions formant les éléments chauffants 114 est par exemple comprise entre environ 250 μm et 500 μm.

Des accès électriques aux couches 109, 111 ainsi qu'aux éléments chauffants 114 sont formés en ne recouvrant pas certaines parties de ces couches 109, 111 et des éléments chauffants 114. La figure 4 représente une vue de dessus d'une partie du dispositif 100 dans lequel une région 124 de ce dispositif 100 comporte ces parties d'accès électrique à ces éléments. Les connexions électriques à ces régions d'accès sont par exemple réalisées via des portions de colle anisotrope comprenant des billes d'argent noyées dans la colle, sur lesquelles est reporté un circuit électronique de commande et de mesure, par exemple un circuit imprimé souple comporte un substrat flexible (polyimide par exemple), qui comporte des plots de soudure auxquels sont reliées les portions de colle. D'autres techniques de connexions électriques sont toutefois possibles.

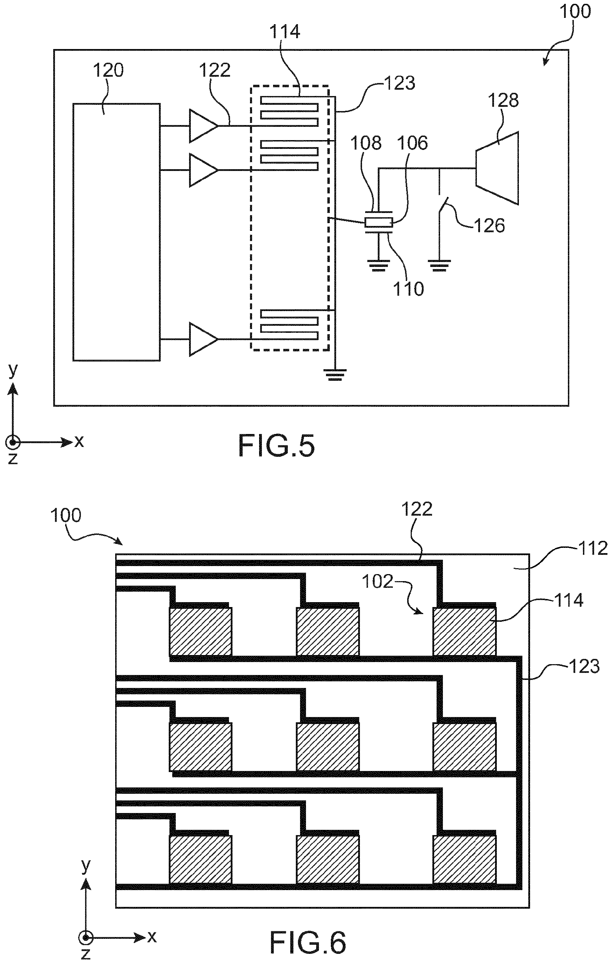

La figure 5 représente schématiquement le circuit électrique formé par les différents éléments du dispositif 100 précédemment décrit.

Du fait que les électrodes 108 et 110 de tous les pixels 102 sont formées par des couches électriquement conductrices 109, 111 communes à tous les pixels 102, la lecture réalisée pour chaque pixel 102 correspond à une lecture de la capacité formée entre ces couches 109, 111 et qui correspond donc à tous les pixels 102. Toutefois, étant donné que le chauffage des pixels 102 est commandé individuellement pour chaque pixel 102, la lecture simultanée de tous les pixels 102 permet de savoir si un élément est présent ou non au-dessus du pixel 102 qui est chauffé.

Un tel dispositif 100 ne fait donc appel à aucun transistor de sélection de pixel.

Le circuit de lecture du dispositif 100 comporte un interrupteur 126 permettant, en connectant l'électrode de lecture 108 à la masse, de remettre à zéro la capacité pyroélectrique, ainsi qu'un convertisseur analogique - numérique (CAN) 128, par exemple de type delta-sigma, permettant de lire la tension induite par les charges générées dans la capacité pyroélectrique.

La lecture de chaque pixel 102 peut être réalisée de la manière suivante :

- application d'une tension aux bornes de l'élément chauffant 114 du pixel 102 destiné à être lu ;
- remise à zéro de la capacité pyroélectrique en fermant l'interrupteur 126. Cette remise à zéro de la capacité pyroélectrique est réalisée juste après l'application de la tension aux bornes de l'élément chauffant 114 du pixel 102 pour éviter d'injecter des charges liées à l'augmentation de tension aux bornes de l'élément chauffant 114 ou aux divers appels de courant provoquant du bruit ;
- attente du temps d'intégration $\zeta$, par exemple égal à environ 0,5 seconde ;
- lecture de la tension aux bornes de la capacité pyroélectrique avec le CAN 128 ;
- remise à zéro de la capacité pyroélectrique en fermant l'interrupteur 126 ;
- attente d'un temps de refroidissement par exemple au moins égal à deux fois le temps d'intégration $\zeta$.

Ces opérations sont répétées pour lire chaque pixel. Ainsi, pour réaliser la lecture du dispositif 100 lorsqu'il comporte une matrice de 9 x 4 pixels 102, soit 36 pixels, le temps nécessaire à la lecture de tous les pixels est égal à environ 54 secondes.

Afin de réduire le temps de lecture nécessaire à la lecture de la matrice de pixels 102 du dispositif 100, il est possible d'augmenter l'énergie, et donc la puissance, de chauffe des pixels 102 et ainsi réduire la durée pendant laquelle le matériau pyroélectrique des pixels 102 est chauffé.

En variante, le dispositif 100 peut comporter un amplificateur interposé entre la capacité pyroélectrique et le CAN 128.

Le dispositif 100 décrit ci-dessus en lien avec le premier mode de réalisation correspond à un dispositif de détection adapté pour réaliser une détection d'une personne dans un lit. Les matériaux et épaisseurs précédemment décrits des différents éléments du dispositif 100 permettent au dispositif 100 d'être souple. En outre, un tel dispositif 100 peut également réaliser une fonction de chauffage grâce à la chaleur générée par les éléments chauffants 114.

En variante, les dimensions du dispositif 100 peuvent être adaptées pour qu'il serve à réaliser une détection au sol, c'est-à-dire intégré dans le revêtement de sol, ou encore sous la forme d'un tapis.

Dans le premier mode de réalisation précédemment décrit, l'électrode inférieure 108 forme l'électrode de lecture et l'électrode supérieure 110 est reliée à un potentiel électrique de référence tel que la masse. En variante, il est possible que l'électrode supérieure 110 forme l'électrode de lecture et que l'électrode inférieure 108 soit reliée à la masse.

Selon une autre variante de réalisation, il est possible que l'une des électrodes inférieure 108 et supérieure 110 forme l'électrode de lecture, et que l'autre des électrodes inférieure 108 et supérieure 110 soit formée directement par les éléments chauffants 114. Dans ce cas, une pleine couche métallique est disposée sur la couche diélectrique 112 pour former le blindage du dispositif 100.

En outre, dans le premier mode de réalisation précédemment décrit, les éléments chauffants 114 sont formés par des portions de matériau résistif déposées sous la forme de serpentins. En variante, il est toutefois possible de réaliser chaque élément chauffant 114 sous la forme d'une portion de forme différente, par exemple de forme carrée ou rectangulaire, à partir d'un matériau plus résistif que celui servant à réaliser les pistes conductrices 122, 123, comme par exemple du PDOT:PSS ayant une résistivité comprise entre environ 100 et 500 $\Omega$ par carré, ce qui permet de réaliser une résistance d'un carré ayant une résistance d'environ 100 $\Omega$. De tels éléments chauffants sont représentés sur la figure 6.

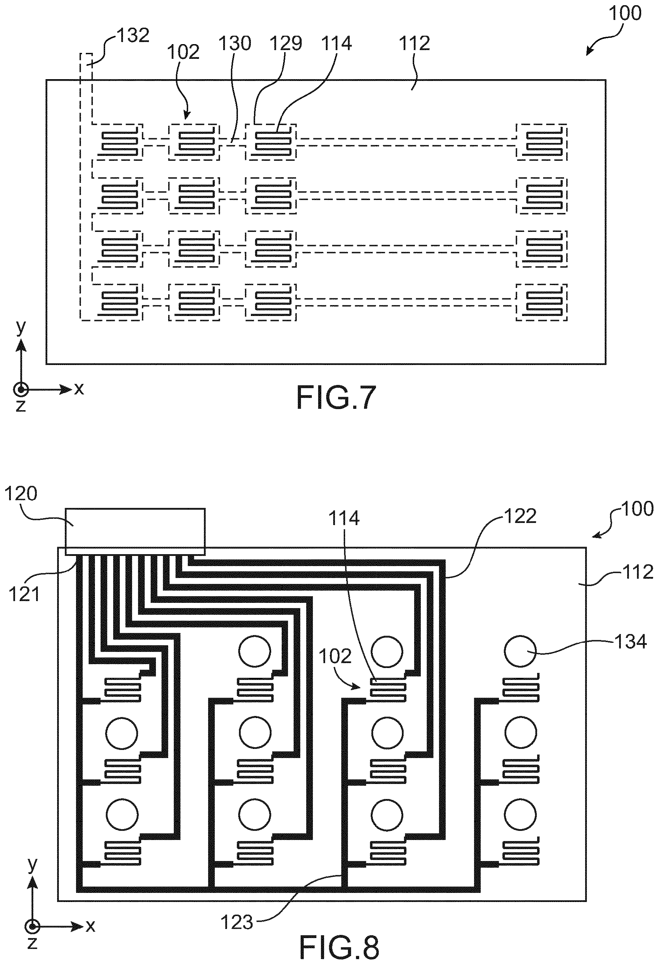

La figure 7 représente une vue de dessus d'une partie du dispositif 100 (tous les pixels ne sont pas représentés) selon un deuxième mode de réalisation.

Contrairement au premier mode de réalisation dans lequel la couche 109 formant les électrodes inférieures 108 est continue et a une surface sensiblement également à celles des autres couches 113, 111 et 112 du dispositif 100 (hormis au niveau des régions d'accès électrique à ces couches), la couche 109 selon ce deuxième mode de réalisation est bien continue d'un point de vue électrique pour l'ensemble des pixels 102, c'est-à-dire que la couche 109 est commune à tous les pixels 102 et forme les électrodes inférieures 108 de tous les pixels 102, mais est structurée, ou gravée, telle que des parties de cette couche 109 se trouvant entre les pixels 102 soient supprimées. Sur l'exemple de la figure 7, la couche 109 comporte des premières portions 129 se trouvant en regard des éléments chauffants 114 et formant les électrodes inférieures 108, ainsi que des deuxièmes portions 130 reliant électriquement entre elles les premières portions 129. La couche 109 comporte également une troisième portion 132 reliant électriquement la couche 109 au circuit 120.

Ce deuxième mode de réalisation a pour avantage de réduire la valeur de la capacité pyroélectrique globale formée par les pixels 102, et donc d'augmenter la valeur de la tension (signal lu) obtenue aux bornes des pixels 102.

Par exemple, si chacune des premières portions 129 forme un carré de surface égale à environ 40 mm x 40 mm, la surface totale des 36 électrodes inférieures 108 formées par les premières portions 129 est égale à environ $57.10^{-3}$ m$^2$. En considérant que la surface totale occupée par les portions 130 et 132 est sensiblement similaire, la surface totale obtenue est environ 17 fois inférieure à celle occupée par la couche 109 non gravée comme dans le premier mode de réalisation (de surface égale à 0,9 m x 1,9 m = 1,7 m$^2$). La capacité totale des pixels 102 selon cet exemple du deuxième mode de réalisation est alors égale à environ $2.10^{-6}$ F.

La tension obtenue aux bornes de la capacité formée par les pixels 102 est dans ce cas de l'ordre d'1 millivolt.

La figure 7 ne représente qu'une structuration possible parmi de nombreuses autres de la couche 109 formant les électrodes inférieures 108 des pixels 102.

Dans les modes de réalisation précédemment décrits, l'adressage des éléments chauffants 114 est réalisé en utilisant une piste électriquement conductrice 122 dédiée pour chacun des éléments chauffants 114. En variante, il est possible que l'adressage des éléments chauffants 114 soit réalisé tel que chaque piste conductrice 122 alimente plusieurs éléments chauffants 114 par ligne et/ou par colonne et en disposant en amont de chaque élément chauffant 114 une diode (la diode servant à éviter la circulation du courant dans divers chemins parasites). Ainsi, seul l'élément chauffant 114 se trouvant au croisement de la ligne et de la colonne alimentées chauffe. Cette variante peut être avantageuse lorsque le nombre d'éléments chauffants 114 est important, par exemple supérieur à environ 50 ou 64 (par exemple, l'adressage de 64 éléments chauffants disposés selon une matrice 8 x 8 peut être réalisé en utilisant 8 pistes conductrices chacune reliée à une des 8 lignes d'éléments chauffants, ainsi que de 8 pistes conductrices chacune reliée à une des 8 colonnes d'éléments chauffants). Toutefois, la réalisation des résistances et diodes supplémentaires implique la mise en oeuvre d'étapes supplémentaires qui impactent le coût de réalisation du dispositif 100.

Selon une variante de réalisation représentée sur la figure 8 et pouvant s'appliquer aux deux modes de réalisation précédemment décrits, il est possible de réaliser des trous 134 à travers toutes les couches de l'empilement du dispositif 100. Ces trous 134 permettent notamment de rendre le dispositif 100 plus perméable, ajoutant ainsi du confort d'utilisation par exemple lorsque le dispositif 100 correspond à un dispositif de détection de personnes destiné à être utilisé dans un lit. En outre, la réalisation de tels trous 134 a également pour avantage d'améliorer la sensibilité de détection du dispositif 100 car la capacité pyroélectrique totale formée par les pixels 102 est réduite (en raison de la réduction de la surface des couches 109, 111 et 113 de cette capacité engendrée par la formation des trous 134), et la tension de lecture obtenue aux bornes de cette capacité est donc plus importante pour une même quantité de charges générées dans la capacité.

Quel que soit le mode de réalisation et/ou la variante de réalisation du dispositif 100, il est possible que la lecture des pixels 102 ne soit pas réalisée individuellement, mais par groupe de pixels 102. Pour cela, les éléments chauffants 114 d'un de ces groupes de pixels 102 sont allumés en même temps. Cela peut servir à augmenter la sensibilité (en termes de niveau de tension obtenu) du dispositif 100 car le signal de lecture obtenu sera plus important, mais au détriment de la résolution du dispositif 100 qui est réduite.

Quel que soit le mode de réalisation et/ou la variante de réalisation du dispositif 100, il est possible d'utiliser un des pixels 102 du dispositif 100 en tant que référence, par exemple un des pixels 102 disposés dans les coins de la matrice de pixels 102. Pour cela, une charge thermique prédéterminée est disposée sur ce pixel de référence. La mesure réalisée pour chacun des autres pixels 102 peut alors être vue comme une mesure différentielle vis-à-vis de ce pixel de référence, ce qui permet d'améliorer la sensibilité du dispositif 100. En variante de ce pixel de référence, il est possible de soustraire une valeur arbitraire en tension, correspondant à un certain pourcentage, (par exemple 75 %) de la tension maximale obtenue pour un pixel 102 en contact avec de l'air. Selon une autre variante, il est possible d'ajuster la puissance injectée de manière à atteindre la tension maximale du CAN 128, puis de considérer une partie de cette tension maximale, par exemple 50 % ou 75 %, en tant que valeur minimale.

En variante des différents modes de réalisation précédemment décrits, il est possible que la couche conductrice servant à la réalisation des éléments chauffants 114 soit utilisée pour former également des résistances électriques supplémentaires ne servant pas à la détection réalisée par le dispositif 100 mais servant uniquement de chauffage. Le dispositif 100 peut dans ce cas inclure un thermostat permettant le réglage de ce chauffage, ainsi qu'un thermomètre permettant de détecter la température absolue du dispositif 100 du fait que la détection réalisée correspond à une détection d'une variation de température.

Bien que non représenté, le dispositif 100 peut comporter en outre un circuit électronique de traitement apte à construire une image globale obtenue à partir des mesures réalisées au niveau de chacun des pixels 102. Ce circuit électronique de traitement peut également être apte à comparer cette image à plusieurs images stockées dans une base de données. Le circuit électronique de traitement peut également être apte à afficher une image de la détection réalisé.

En outre, plusieurs dispositifs 100 tels que décrits précédemment peuvent être disposés côte à côte, par exemple sur un même substrat, et être reliés électriquement en parallèle entre eux.

Enfin, les différents modes et variantes de réalisation précédemment décrits peuvent être combinés les uns aux autres.

Dans la description ci-dessus, le dispositif réalise la détection d'un motif thermique, c'est-à-dire la forme d'une masse thermique se trouvant sur le dispositif, grâce aux détections réalisées au niveau des différents pixels du dispositif. Ce dispositif peut toutefois servir à détecter non pas le motif de la masse thermique, mais à détecter uniquement la présence de cette masse thermique sur ou à proximité du dispositif, par exemple à travers un tissu ou un revêtement.

**Revendications**

1. Dispositif (100) de détection thermique actif comportant plusieurs pixels (102), chaque pixel (102) comprenant au moins :

   - une capacité pyroélectrique formée par au moins une portion de matériau pyroélectrique (106) disposée entre une électrode inférieure (108) et une électrode supérieure (110), dans laquelle une première des électrodes inférieure (108) et supérieure (110) correspond à une électrode de lecture du pixel (102), et
   - un élément chauffant (114) associé uniquement à ce pixel (102) et apte à chauffer la portion de matériau pyroélectrique (106) de la capacité pyroélectrique dudit pixel (102) indépendamment des autres éléments chauffants (114) associés aux autres pixels (102) lors d'une mesure thermique par la capacité pyroélectrique dudit pixel (102),

   dans lequel le dispositif (100) comporte en outre au moins un circuit de lecture auquel les électrodes de lecture (108) sont reliées, **caractérisé en ce que** les électrodes de lecture (108) sont formées par une première couche (109) électriquement conductrice commune à tous les pixels (102) et en contact avec les portions de matériau pyroélectrique (106) des pixels (102).

2. Dispositif (100) selon la revendication 1, dans lequel les pixels (102) forme ensemble une surface de détection comprise entre environ $0,5\,m^2$ et $10\,m^2$, et/ou dans lequel chaque pixel (102) forme une surface de détection comprise entre environ $1\,cm^2$ et $100\,cm^2$, et/ou comportant un nombre de pixels (102) compris entre environ 25 et 250.

3. Dispositif (100) selon l'une des revendications précédentes, dans lequel une deuxième des électrodes inférieure (108) et supérieure (110) de chaque pixel (102) est formée par une deuxième couche (111) électriquement conductrice commune à tous les pixels (102) et apte à être reliée électriquement à un potentiel électrique de référence.

4. Dispositif (100) selon la revendication 3, dans lequel la deuxième couche (111) électriquement conductrice est disposée entre les éléments chauffants (114) et les électrodes de lecture (108).

5. Dispositif (100) selon l'une des revendications précédentes, comportant en outre une couche diélectrique (112) recouvrant les électrodes supérieures (108) des pixels (102) et sur laquelle les éléments chauffants (114) sont disposés.

6. Dispositif (100) selon l'une des revendications précédentes, dans lequel chaque élément chauffant (114) comporte une ou plusieurs portions de matériau formant un élément résistif disposé à l'aplomb d'une partie de la capacité pyroélectrique du pixel (102) et dont des première et deuxième extrémités sont reliées électriquement, par l'intermédiaire de premières et deuxièmes pistes (122, 123) électriquement conductrices, à un circuit de commande électronique (120) apte à faire circuler un courant électrique de chauffage dans chaque élément résistif individuellement tel qu'il chauffe par effet Joule la capacité pyroélectrique du pixel (102).

7. Dispositif (100) selon la revendication 6, dans lequel chaque élément résistif comporte une ou plusieurs portions de matériau résistif de section inférieure à celle des premières et deuxièmes pistes (122, 123) conductrices et/ou dans lequel le matériau de la ou les portions formant chaque élément résistif a une résistivité supérieure à un matériau des premières et deuxièmes pistes (122, 123) électriquement conductrices.

8. Dispositif (100) selon l'une des revendications 6 ou 7, dans lequel la première extrémité de chaque élément résistif est reliée électriquement au circuit de commande électronique (120) par l'intermédiaire d'une des premières pistes (122) électriquement conductrices distincte des autres premières pistes (122) électriquement conductrices reliant électriquement les premières extrémités des autres éléments résistifs au circuit de commande électronique (120), et/ou dans lequel les deuxièmes extrémités des éléments résistifs des pixels (102) sont reliées électriquement au circuit de commande électronique (120) par l'intermédiaire des deuxièmes pistes (123) électriquement conductrices qui sont reliées électriquement entre elles.

9. Dispositif (100) selon l'une des revendications 6 à 8, dans lequel des parties des couches (109, 111) formant les électrodes inférieures (108) et supérieures (110) des pixels (102) et des parties des premières et deuxièmes (122, 123) pistes conductrices ne sont pas recouvertes par d'autres matériaux et forment des accès électriques (124) aux électrodes inférieures (108) et supérieures (110) et aux éléments chauffants (114).

10. Dispositif (100) selon l'une des revendications précédentes, dans lequel la première couche (109) électriquement conductrice est gravée telle qu'elle comporte des premières portions (129) localisées sous les éléments chauffants (114) et formant les électrodes de lecture des pixels (102), et des deuxièmes portions (130) reliant électriquement entre elles les premières portions (129).

**11.** Dispositif (100) selon l'une des revendications précédentes, comportant en outre des trous (134) traversant le dispositif (100).

**12.** Dispositif (100) selon l'une des revendications précédentes, dans lequel le matériau pyroélectrique est du PVDF ou du P(VDF-TrFE), et/ou dans lequel les pixels (102) sont disposés les uns à côté des autres en formant une matrice de plusieurs lignes et colonnes.

**13.** Procédé de réalisation d'un dispositif (100) de détection thermique actif comportant plusieurs pixels (102), le procédé comportant au moins la mise en oeuvre des étapes suivantes :

- réalisation, pour chaque pixel (102), d'au moins une capacité pyroélectrique formée par au moins une portion de matériau pyroélectrique (106) disposée entre une électrode inférieure (108) et une électrode supérieure (110), dans laquelle une première des électrodes inférieure (108) et supérieure (110) correspond à une électrode de lecture du pixel (102),
- réalisation, pour chaque pixel (102), d'au moins un élément chauffant (114) associé uniquement à ce pixel (102) et apte à chauffer la portion de matériau pyroélectrique (106) de la capacité pyroélectrique dudit pixel (102) indépendamment des autres éléments chauffants (114) associés aux autres pixels (102) lors d'une mesure thermique par la capacité pyroélectrique dudit pixel (102),
- réalisation d'au moins un circuit de lecture auquel les électrodes de lecture (108) sont reliées,

**caractérisé en ce que** les électrodes de lecture (108) sont formées par une première couche (109) électriquement conductrice commune à tous les pixels (102) et en contact avec les portions de matériau pyroélectrique (106) des pixels (102).

**14.** Procédé selon la revendication 13, dans lequel la réalisation des électrodes inférieures (108) des pixels (102) et/ou des électrodes supérieures (110) des pixels (102) et/ou des éléments chauffants (117) des pixels (102) comporte la mise en oeuvre d'au moins un dépôt par impression d'au moins un matériau électriquement conducteur.

**15.** Procédé selon l'une des revendications 13 ou 14, dans lequel la réalisation de la capacité pyroélectrique de chaque pixel (102) comporte la mise en oeuvre d'une gravure de la première couche (109) électriquement conductrice telle que des portions restantes de la première couche (109) électriquement conductrice forment des premières portions (129) localisées sous les éléments chauffants (114) et formant les électrodes de lecture (108) des pixels (102), et des deuxièmes portions (130) reliant électriquement entre elles les premières portions (129).

**Patentansprüche**

**1.** Vorrichtung (100) zur aktiven thermischen Detektion, umfassend mehrere Pixel (102), wobei jedes Pixel (102) wenigstens Folgendes umfasst:

- eine pyroelektrische Kapazität, die durch wenigstens einen Bereich aus pyroelektrischem Material (106) gebildet ist, der zwischen einer unteren Elektrode (108) und einer oberen Elektrode (110) angeordnet ist, wobei eine erste von der unteren (108) und der oberen (110) Elektrode einer Leseelektrode des Pixels (102) entspricht, und
- ein Heizelement (114), das ausschließlich diesem Pixel (102) zugeordnet ist und dazu ausgelegt ist, während einer thermischen Messung durch die pyroelektrische Kapazität des Pixels (102) den Bereich aus pyroelektrischem Material (106) der pyroelektrischen Kapazität des Pixels (102) unabhängig von den anderen Heizelementen (114) zu heizen, die den anderen Pixeln (102) zugeordnet sind,

wobei die Vorrichtung (100) ferner wenigstens eine Leseschaltung umfasst, mit der die Leseelektroden (108) verbunden sind, **dadurch gekennzeichnet, dass** die Leseelektroden (108) durch eine erste elektrisch leitende Schicht (109) gebildet sind, die allen Pixeln (102) gemeinsam ist und in Kontakt mit den Bereichen aus pyroelektrischen Material (106) der Pixel (102) ist.

**2.** Vorrichtung (100) nach Anspruch 1, wobei die Pixel (102) gemeinsam eine Detektionsoberfläche bilden, die zwischen ungefähr 0,5 m$^2$ und 10 m$^2$ enthalten ist, und/oder wobei jedes Pixel (102) eine Detektionsoberfläche bildet, die zwischen ungefähr 1 cm$^2$ und 100 cm$^2$ enthalten ist, und/oder umfassend eine Zahl von Pixeln (102), die zwischen ungefähr 25 und 250 enthalten ist.

**3.** Vorrichtung (100) nach einem der vorhergehenden Ansprüche, wobei eine zweite von der unteren (108) und der oberen (110) Elektrode jedes Pixels (102) durch eine zweite elektrisch leitende Schicht (111) gebildet ist, die allen Pixeln (102) gemeinsam ist und dazu ausgelegt ist, elektrisch mit einem elektrischen Referenzpotential verbunden zu sein.

**4.** Vorrichtung (100) nach Anspruch 3, wobei die zweite elektrisch leitende Schicht (111) zwischen den Heizelementen (114) und den Leseelektroden (108) angeordnet ist.

5. Vorrichtung (100) nach einem der vorhergehenden Ansprüche, ferner umfassend eine dielektrische Schicht (112), die die oberen Elektroden (108) der Pixel (102) bedeckt und auf der die Heizelemente (114) angeordnet sind.

6. Vorrichtung (100) nach einem der vorhergehenden Ansprüche, wobei jedes Heizelement (114) ein oder mehrere Bereiche aus Material umfasst, die ein Widerstandselement bilden, das lotrecht zu einem Teil der pyroelektrischen Kapazität der Pixel (102) angeordnet ist und dessen erste und zweite Enden elektrisch mit Hilfe von ersten und zweiten elektrisch leitenden Bahnen (122, 123) mit einer elektronischen Steuerschaltung (120) verbunden sind, die dazu ausgelegt ist, einen elektrischen Heizstrom individuell in jedem Widerstandselement derart zirkulieren zu lassen, dass es die pyroelektrische Kapazität des Pixels (102) durch den Joule-Effekt heizt.

7. Vorrichtung (100) nach Anspruch 6, wobei jedes Widerstandselement ein oder mehr Bereiche aus Widerstandsmaterial mit einem Querschnitt umfasst, der kleiner ist als jener der ersten und zweiten leitenden Bahnen (122, 123), und/oder wobei das Material des Bereichs oder der Bereiche, das/die jedes Widerstandselement bildet/bilden, einen Widerstand hat, der größer ist als bei einem Material der ersten und zweiten elektrisch leitenden Bahnen (122,123).

8. Vorrichtung (100) nach einem der Ansprüche 6 oder 7, wobei das erste Ende jedes Widerstandselements elektrisch mit der elektronischen Steuerschaltung (120) verbunden ist mit Hilfe von einer der elektrisch leitenden ersten Bahnen (122), die verschieden ist von den anderen elektrisch leitenden ersten Bahnen (122), die die ersten Enden der anderen Widerstandselemente elektrisch mit der elektronischen Steuerschaltung (120) verbinden, und/oder wobei die zweiten Enden der Widerstandselemente der Pixel (102) elektrisch mit der elektronischen Steuerschaltung (120) mit Hilfe der elektrisch leitenden zweiten Bahnen (123) verbunden sind, die elektrisch miteinander verbunden sind.

9. Vorrichtung (100) nach einem der Ansprüche 6 bis 8, wobei Teile der Schichten (109, 111), die die unteren (108) und die oberen (110) Elektroden der Pixel (102) bilden, und Teile der ersten und zweiten (122, 123) leitenden Bahnen nicht durch andere Materialien bedeckt sind und elektrische Zugänge (124) zu den unteren (108) und oberen (110) Elektroden und zu den Heizelementen (114) bilden.

10. Vorrichtung (100) nach einem der vorhergehenden Ansprüche, wobei die erste elektrisch leitende Schicht (109) derart geätzt ist, dass sie erste Bereiche (129) umfasst, die unter den Heizelementen (114) lokalisiert sind und die Leseelektroden der Pixel (102) bilden, sowie zweite Bereiche (130), die die ersten Bereiche (129) elektrisch miteinander verbinden.

11. Vorrichtung (100) nach einem der vorhergehenden Ansprüche, ferner umfassend Löcher (134), die die Vorrichtung (100) durchsetzen.

12. Vorrichtung (100) nach einem der vorhergehenden Ansprüche, wobei das pyroelektrische Material PVDF oder P(VDF-TrFE) ist, und/oder wobei die Pixel (102) nebeneinander angeordnet sind, wobei sie eine Matrix mit mehreren Zeilen und Spalten bilden.

13. Verfahren zur Herstellung einer Vorrichtung (100) zur aktiven thermischen Detektion, umfassend mehrere Pixel (102), wobei das Verfahren wenigstens die Durchführung der folgenden Schritte umfasst:

    - Herstellen, für jedes Pixel (102), wenigstens einer pyroelektrischen Kapazität, die durch wenigstens einen Bereich aus pyroelektrischem Material (106) gebildet ist, der zwischen einer unteren Elektrode (108) und einer oberen Elektrode (110) angeordnet ist, wobei eine erste von der unteren (108) und der oberen (110) Elektrode einer Leseelektrode des Pixels (102) entspricht,
    - Herstellen, für jedes Pixel (102), wenigstens eines Heizelements (114), das ausschließlich diesem Pixel (102) zugeordnet ist und dazu ausgelegt ist, während einer thermischen Messung durch die pyroelektrische Kapazität des Pixels (102) den Bereich aus pyroelektrischem Material (106) der pyroelektrischen Kapazität des Pixels (102) unabhängig von den anderen Heizelementen (114) zu heizen, die den anderen Pixeln (102) zugeordnet sind,
    - Herstellen wenigstens einer Leseschaltung, mit der die Leseelektroden (108) verbunden sind,

    dadurch gekennzeichnet, dass die Leseelektroden (108) durch eine erste elektrisch leitende Schicht (109) gebildet sind, die allen Pixeln (102) gemeinsam ist und in Kontakt mit den Bereichen aus pyroelektrischen Material (106) der Pixel (102) ist.

14. Verfahren nach Anspruch 13, wobei die Herstellung der unteren Elektroden (108) der Pixel (102) und/oder der oberen Elektroden (110) der Pixel (102) und/oder der Heizelemente (117) der Pixel (102) die Durchführung wenigstens einer Abscheidung durch Aufdrucken wenigstens eines elektrisch leitenden Materials umfasst.

15. Verfahren nach einem der Ansprüche 13 oder 14, wobei die Herstellung der pyroelektrischen Kapazität jedes Pixels (102) die Durchführung eines Ätzens der ersten elektrisch leitenden Schicht (109) derart umfasst, dass verbleibende Bereiche der elektrisch leitenden ersten Schicht (109) erste Bereiche (129) bilden, die unter den Heizelementen (114) lokalisiert sind und die Leseelektroden (108) der Pixel (102) bilden, sowie zweite Bereiche (130), die die ersten Bereiche (129) elektrisch miteinander verbinden.

**Claims**

1. An active thermal detection device (100) including several pixels (102), each pixel (102) comprising at least:

   - a pyroelectric capacity formed by at least a portion of pyroelectric material (106) arranged between a lower electrode (108) and an upper electrode (110), wherein a first of the lower (108) and upper (110) electrodes corresponds to a pixel (102) reading electrode, and
   - a heating member (114) associated only to this pixel (102) and capable of heating the portion of pyroelectric material (106) of the pyroelectric capacity of said pixel (102) independently from the other heating members (114) associated with the other pixels (102) during a thermal measurement by the pyroelectric capacity of said pixel (102),

   wherein the device (100) further includes at least a reading circuit to which the reading electrodes (108) are connected, **characterized in that** the reading electrodes (108) are formed by a first electrically conductive layer (109) shared with all pixels (102) and in contact with the portions of pyroelectric material (106) of the pixels (102).

2. The device (100) according to claim 1, wherein the pixels (102) together form a detection surface ranging between 0.5m$^2$ and 10m$^2$ and/or wherein each pixel (102) forms a detection surface ranging between about 1cm$^2$ and 100cm$^2$, and/or including a number of pixels (102) ranging between around 25 and 250.

3. The device (100) according to any of the preceding claims, wherein a second of the lower (108) and upper (110) electrodes of each pixel (102) is formed by a second electrically conductive layer (111) shared with all pixels (102) and capable of being electrically connected to a reference electric potential.

4. The device (100) according to claim 3, wherein the second electrically conductive layer (111) is arranged between the heating members (114) and the reading electrodes (108).

5. The device (100) according to any of the preceding claims, further including a dielectric layer (112) covering the upper electrodes (108) of the pixels (102) and whereon the heating members (114) are arranged.

6. The device (100) according to any of the preceding claims, wherein each heating member (114) includes one or several portions of material forming a resistive member arranged in the perpendicularity of a part of the pyroelectric capacity of the pixel (102) and whereof first and second ends are connected electrically, by means of first and second electrically conductive tracks (122, 123) to an electronic control circuit (120) capable of circulating an electric heating current in each resistive member individually so that it heats by Joule effect the pyroelectric capacity of the pixel (102).

7. The device (100) according to claim 6, wherein each resistive member includes one or several portions of resistive material of a section lower than that of the first and second conductive tracks (122,123) and/or wherein the material of the portion or portions forming each resistive member has a resistivity higher than that of a material of the first and second electrically conductive tracks (122, 123).

8. The device (100) according to any of claims 6 or 7, wherein the first end of each resistive member is electrically connected to the electronic control circuit (120) by means of one of the first electrically conductive tracks (122) distinct from the other first electrically conductive tracks (122) electrically connecting the first ends of the other resistive members to the electronic control circuit (120), and/or wherein the second ends of the resistive members of the pixels (102) are electrically connected to the electronic control circuit (120) by means of the second electrically conductive tracks (123) which are electrically connected to each other.

9. The device (100) according to any of claims 6 to 8, wherein parts of the layers (109, 111) forming the lower (108) and upper (110) electrodes of the pixels (102) and parts of the first and second (122, 123) conductive tracks are not covered by other materials and form electric accesses (124) for the lower (108) and upper (110) electrodes and for the heating members (114).

10. The device (100) according to any of the preceding claims, wherein the first electrically conductive layer (109) is engraved such that it includes first portions (129) placed under the heating members (114) and forming the reading electrodes of the pixels (102), and the second (130) portions electrically connecting the first portions (129) to each other.

11. The device (100) according to any of the preceding claims, further including holes (134) crossing through the device (100).

12. The device (100) according to any of the preceding claims, wherein, the pyroelectric material is PVDF or P(VDF-TrFE), and/or wherein the pixels (102) are arranged beside each other forming a matrix of several lines and columns.

13. A method for producing an active thermal detection device (100) including several pixels (102), the method including at least the implementation of the following steps:

> - producing, for each pixel (102), at least a pyroelectric capacity formed by at least a portion of pyroelectric material (106) arranged between a lower electrode (108) and an upper electrode (110), wherein a first of the lower (108) and upper (110) electrodes corresponds to a pixel (102) reading electrode,
> - producing, for each pixel (102) at least one heating member (114) associated only to this pixel (102) and capable of heating the portion of pyroelectric material (106) of the pyroelectric capacity of said pixel (102) independently from the other heating members (114) associated to the other pixels (102) during a thermal measurement by the pyroelectric capacity of said pixel (102),
> - producing at least a reading circuit to which the reading electrodes (108) are connected, **characterized in that** the reading electrodes (108) are formed by a first electrically conductive layer (109) shared by all pixels (102) and in contact with the portions of the pixels (102) pyroelectric material (106).

14. The method according to claim 13, wherein producing the lower electrodes (108) of the pixels (102) and/or the upper electrodes (110) of the pixels (102) and/or the heating members (117) of the pixels (102) includes implementing at least a deposit by printing at least one electrically conductive material.

15. The method according to any of claims 13 or 14, wherein the producing of the pyroelectric capacity of each pixel (102) includes the implementation of an engraving of the first electrically conductive layer (109) such that remaining portions of the first electrically conductive layer (109) form first portions (129) located under the heating members (114) and forming the reading electrodes (108) of the pixels (102), and second portions (130) electrically connecting the first portions (129) to each other.

FIG.1

FIG.2

FIG.3

FIG.4

FIG.5

FIG.6

FIG.7

FIG.8

**RÉFÉRENCES CITÉES DANS LA DESCRIPTION**

**Documents brevets cités dans la description**

- US 4888581 A
- WO 2014037016 A1
- US 6091837 A
- EP 2385486 A1